# EUROPEAN PATENT SPECIFICATION

(11) **EP 0 565 494 B1**
(45) Date of publication and mention of the grant of the patent: **30.07.1997**
(21) Application number: 93830124.9
(22) Date of filing: 29.03.1993
(51) Int. Cl.: B44F 1/06, B32B 17/10, B44C 5/04, C03C 17/34

(54) **Method for the figurative and chromatic decoration of flat glass and articles of manufacture made thereby**
Verfahren zur gemusterten chromatischen Dekoration von Flachglas und dadurch hergestellte Gegenstände
Méthode pour la décoration à motif et chromatique de verre plat et articles ainsi obtenus

(30) Priority: 06.04.1992 IT MI920836
(43) Date of publication of application: 13.10.1993
(73) Proprietor: AXIVETRO DI MARTELLI GIULIANO & C. S.a.s., I-22063 Cantu' (Como) (IT)
(72) Inventor: Martelli, Giuliano, c/o AXIVETRO S.r.l., I-22063 Cantu' (Como) (IT)
(74) Representative: Cicogna, Franco

(56) References cited:
- EP-A- 0 447 040
- EP-A- 0 480 889
- WO-A-89/03862
- FR-A- 2 653 704
- GB-A- 2 198 087
- JP-A-54 022 216
- US-A- 5 019 440

## Description

### BACKGROUND OF THE INVENTION

The present invention relates to a method which has been specifically designed for the figurative and chromatic decoration of flat glass.

As is known, glass plates are broadly used mainly for making windows, doors, walls for separating rooms, and, moreover, for making furniture pieces wings and the like.

The thus made glass plates are usually transparent and they can be colourless or can be colored by means of comparatively expensive methods and which, anyhow, provide chromatic effects of poor aesthetic level.

More specifically, by using patterns which are manually made or are made by screen printing methods, or by means of suitable masks, it is possible to pattern the above mentioned glass plates but, at present, the obtained decorative effect is comparatively limited.

In fact, the thus made pattern has a poor definition and it is very difficult to make it in different colours, thereby providing unsatisfactory chromatic effects.

Moreover, prior decorations are susceptible to be quickly deteriorated, because of the action of the atmospheric agents and/or in consequence of conventional cleaning operations.

The document J-A-54022216 discloses method for printing a metallic film comprising transfer-printing a matter to be printed applied with an anchor coat of the same type as the protective coat, by using a printing film formed by forming a protective coat consisting of adhesive made of a thermosetting resin and a hardening agent (such as urea) or ultraviolet ray hardening resin through a lubricant, or parting coat of an acryl resin onto a plastic film base matter and applying a printing film of vacuum-plated film or metallic foil on the surface, sticking uniformly the printing film to the matter to be printed in the softened or molten state of the anchor coat of the matter, then hot pressing from home temperature to 150°C bind the anchor coat with the protective coat, stripping away the film base matter and hardening the printed matter by heating it at 60-200°C by infrared ray or electric heater or by applying ultraviolet rays to it.

The document WO-A-89/03862 discloses a glass enamel-composition and a method of decorating and bending a glass substrate. The enamel is fired on a glass substrate to paint an opaque ceramic color. The glass enamel composition is of specially utility in the formation of black windows of automobiles in which an electrically conductive heating grid is also to be formed.

Finally, the document EP-A-0447040 discloses the manufacture of decorative panels in general involving the building up of successive layers of an opaque paint and layers of transparent or translucid particulated material on the surface of a carrier such as a transparent translucent or opaque surface. The opaque paint is preferably based on a two-pack epoxy resin which includes micaceous iron oxide pigment together with at least one metallic pigment such as aluminium. The method provides a range of white and colour versions as well as metal or precious metal surface finish versions.

### SUMMARY OF THE INVENTION

The aim of the present invention is to overcome the above mentioned drawbacks, by providing a method which can be carried out very easily in order to provide decorations and patterns, even of complex configuration, on flat glass plates.

Within the scope of the above mentioned aim, a main object of the present invention is to provide a method for decorating flat glass plates which allows to obtain optimum level chromatic effects and which, moreover, is adapted to provide patterned glass plates which are practically unaffected by the atmospheric agents and/or cleaning operations.

According to one aspect of the present invention, the above mentioned aim and objects, as well as yet other objects, which will become more apparent hereinafter, are achieved by a method for the figurative and chromatic decoration of flat glass, characterized in that said method comprises the steps of applying, to one of the faces of a glass plate, either transparent or colored, a thin layer of a transparent epoxy resin, forming on said transparent epoxy resin, by means of a transfer process, any desired patterns, and then coating said pattern with a coating paint layer, said paint layer containing therein either silvered or golden pigments, said pigments being adapted to provide said pattern with a metallized chromatic aspect.

### BRIEF DESCRIPTION OF THE DRAWINGS

Further characteristics and advantages of the method according to the present invention will become more apparent thereinafter from the following detailed disclosure of a preferred, though not exclusive, embodiment thereof, which is illustrated, by way of an indicative, but not limitative example, in the accompanying drawing, where:

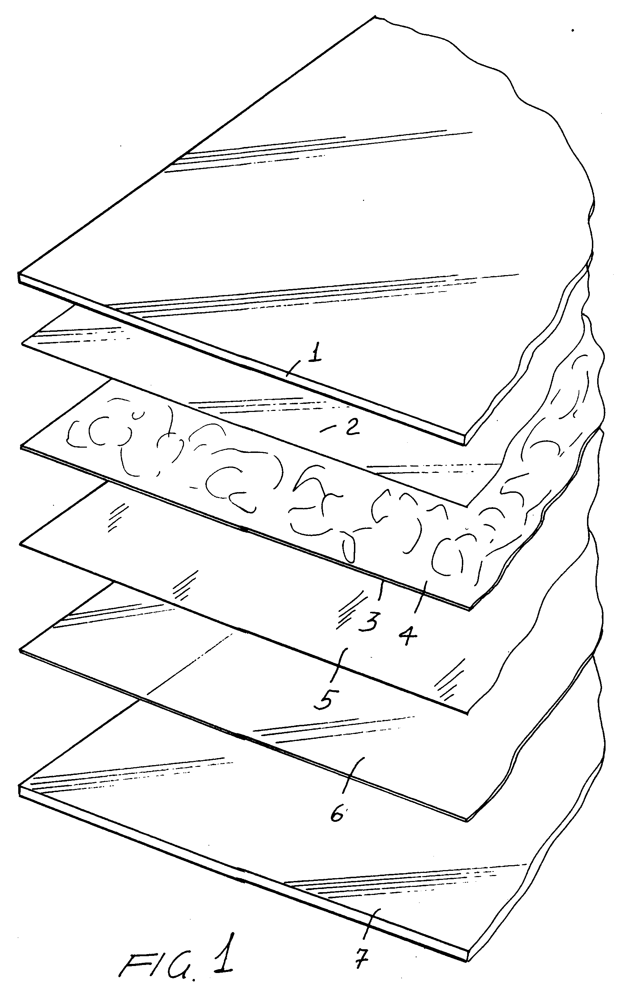

Figure 1 is an exploded perspective view illustrating a generic portion of a decorated or patterned composite glass plate obtained by the method according to the present invention; and

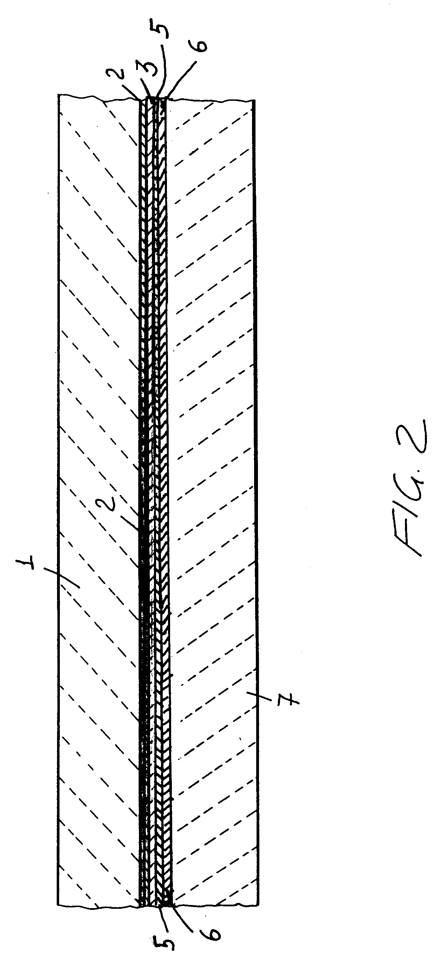

Figure 2 is a cross-sectional view of that same glass article of manufacture.

### DESCRIPTION OF THE PREFERRED EMBODIMENT

With reference to the number references of the figures of the accompanying drawings, the method, particularly designed for the figurative and chromatic decoration of flat glass plates, according to the present invention, comprises the step of applying a thin layer 2 of a transparent or clear epoxy resin on one of the faces of a glass plate 1, which can be either transparent or clear, or, possibly, colored.

The epoxy resin layer is coated on the glass plate by means of spraying, spreading operations, or by other functionally equivalent suitable systems.

The glass plate 1, on the other hand, can be made by any desired conventional glass forming methods; in this connection it should be apparent that the thickness of the glass plate can broadly change, depending on its end use.

After having made the glass plate in the desired thickness, on at least a face thereof, there is sprayed or spreaded, as stated, the mentioned epoxy resin layer; then, on the epoxy resin layer there is transferred, by means of a particular transfer process, a support element 3 including a pattern 4, which pattern can be of any desired types.

In particular, the pattern 4 may be a geometric pattern or a fancy pattern, or it can represent any desired ornamental figures, in dependence with the article of manufacture to be made.

Moreover, the pattern 4 can include any chromatic color compositions, without any limitation, with respect to the making possibilitied thereof.

Then, on the overall support element 3 reproducing the pattern 4, there is coated a coating paint, which provides a paint layer 5 containing pigments, the visible aspect of which is similar to that which can be obtained by means of silvering or gilding or gold-plating processes, which provide the pattern with a background having pleasant chromatic reflecting properties, so as to further improve the decorative features of the pattern 4.

The paint layer will provide simultaneously a protective layer of the mentioned support element 3.

Alternatively, the patterned glass plate can be subjected to a silvering or gilding process adapted to provide the above mentioned layer 5.

Moreover, it is provided to bind the above mentioned glass plate 1 including the layers 2, 3 and 5 to a plate of a thermo-melting material, such as the so-called PVB resin (poly-vinyl-butyl resin) 6 and a second plate of glass or crystal 7, so as to provide a composite construction having good mechanical resistance characteristics, and to further protect said plate 1 from outer athmospheric agents, which would be susceptible to deteriorate the pattern and its decorative effects.

In particular, the fact is to be pointed out that, by binding several plate 1 and 7 or glass or crystal or the like, of which at least one is decorated, and each being coupled to a thermo-melting material plate of the above mentioned type, it is possible to construct a compact construction which can be used for making windows, doors and glass show-cases, working tables, furniture piece wings and the like, with optimum mechanical resistance characteristics.

From the above disclosure and from the observation of the figures of the accompanying drawing, it should be apparent that the invention fully achieves the intended aim and objects.

## Claims

1. A method for the figurative and chromatic decoration of flat glass, characterized in that said method comprises the steps of applying, to one of the faces of a glass plate (1), either transparent or colored, a thin layer of a transparent epoxy resin (2), forming on said transparent epoxy resin (2), by means of a transfer process, any desired patterns, and then coating said pattern with a coating paint layer (5), said paint layer containing therein either silvered or golden pigments, said pigments being adapted to provide said pattern with a metallized chromatic aspect.

2. A method according to Claim 1, characterized in that said epoxy resin (2) is coated on said glass plate (1) by means of spraying operations, spreading operations or other technically equivalent coating process.

3. A method according to Claim 1, characterized in that said glass plate (1) is made by a conventional glass forming process, and its thickness can be varied depending on its end use.

4. A method according to one or more of the preceding claims, characterized in that said pattern is a geometric pattern of a fancy pattern, or any ornamental pattern depending on the aesthetic features of the article of manufacture to be made, or it can imitate wood patterns, marble patterns, or any other natural stone patterns.

5. A method according to Claim 4, characterized in that said pattern includes any desired colored chromatic compositions.

6. A method according to one or more of the preceding claims, characterized in that said paint layer (5) is made by a silvering or golding process.

7. A method according to one or more of the preceding claims, characterized in that said method comprises the step of applying, after having applied said coating metallized or paint layer, containing golden or silvered pigments, a thermomelting plastic material film to which there is hot coupled a glass of crystal plate, operating as a further protecting and reinforcement element.

8. A method according to one or more of the preceding claims, characterized in that said thermomelting plastic material film comprises a polyvinylbutyl resin.

## Patentansprüche

1. Ein Verfahren für die Dekoration mit Mustern und Farben von Flachglas, dadurch gekennzeichnet, daß dieses Verfahren die Schritte der Auftragung einer dünnen Schicht eines durchsichtigen Epoxidharzes (2) auf eine der Seiten einer Glastafel (1) umfaßt, die entweder durchsichtig oder farbig ist, sowie jene des Bildens auf dieser durchsichtigen Epoxidharzschicht (2), mittels eines Abziehbildverfahrens, eines beliebigen gewünschten Motivs, und dann des Bedeckens dieses Motivs mit einer Farbbeschichtung (5), wobei diese Farbbeschichtung entweder Silber- oder Goldpigmente darin enthält und diese Pigmente angepaßt sind, dieses Motiv mit einem metallischen Farbaspekt zu versehen.

2. Ein Verfahren nach Anspruch 1, dadurch gekennzeichnet, daß dieses Epoxidharz (2) auf diese Glastafel (1) durch Sprühen, Gießen oder andere, technisch gleichwertige Beschichtungsverfahren aufgetragen wird.

3. Ein Verfahren nach Anspruch 1, dadurch gekennzeichnet, das diese Glastafel (1) mittels eines gewöhnlichen Glasherstellungsprozesses hergestellt wird, und daß ihre Dicke je nach ihrer Endnutzung variiert werden kann.

4. Ein Verfahren nach einem oder mehreren der vorhergehenden Ansprüche, dadurch gekennzeichnet, daß dieses Motiv ein geometrisches Muster oder ein Phantasiemotiv ist, oder ein beliebiges schmückendes Muster, das von den ästhetischen Merkmalen des herzustellenden Artikels abhängt, oder daß es Holzmuster, Marmormuster oder jedes andere Natursteinmuster nachbilden kann.

5. Ein Verfahren nach Anspruch 4, dadurch gekennzeichnet, daß dieses Motiv jede gewünschte bunte Farbzusammenstellung umfaßt.

6. Ein Verfahren nach einem oder mehreren der vorhergehenden Ansprüche, dadurch gekennzeichnet, daß diese Farbbeschichtung (5) mittels eines Versilberungs- oder Vergoldungsprozesses hergestellt wird.

7. Ein Verfahren nach einem oder mehreren der vorhergehenden Ansprüche, dadurch gekennzeichnet, daß dieses Verfahren, nachdem dieser Anstrich aus einer metallischen oder farbigen Schicht aufgetragen wurde, wobei die Schicht Silber- oder Goldpigmente enthält, den Schritt des Auftragens eines wärmeschmelzenden Films aus Kunststoffmaterial umfaßt, der mit einer Glas- oder Kristalltafel heiß verbunden wird, die als weiteres schützendes und verstärkendes Element wirkt.

8. Ein Verfahren nach einem oder mehreren der vorhergehenden Ansprüche, dadurch gekennzeichnet, das dieser wärmeschmelzende Film aus Kunststoffmaterial ein Polylvinylbutylharz umfaßt.

## Revendications

1. Un procédé pour la décoration à motif et chromatique du verre plat, caractérisé en ce que ledit procédé comprend les étapes de l'application, à l'une des surfaces d'un pan de verre (1), ou bien transparent ou bien coloré, d'une couche mince d'une époxy-résine transparente (2), de la formation sur ladite époxy-résine transparente (2), moyennant une décalcomanie, d'un quelconque motif désiré, et du recouvrement dudit motif avec une couche de peinture recouvrante (5), ladite couche de peinture y contenant des pigments ou bien d'argent ou bien d'or, lesdits pigments étant adaptés à doter ledit motif d'un aspect chromatique métallisé.

2. Un procédé selon la revendication 1, caractérisé en ce que ladite époxy-résine (2) est épandue sur ledit pan de verre moyennant des opérations de pulvérisation, des opérations d'épandage ou par un autre procédé de revêtement techniquement équivalent.

3. Un procédé selon la revendication 1, caractérisé en ce que ledit pan de verre (1) est fabriqué par un procédé de vitrification conventionnel, et que son épaisseur peut varier suivant son utilisation finale.

4. Un procédé selon l'une ou plusieurs des revendications précédentes, caractérisé en ce que ledit motif est un motif géométrique ou de fantaisie ou n'importe quel ornement, suivant es propriétés esthétiques de la manufacture à réaliser, ou qu'il peut reproduire des structures en bois, des structures en marbre, ou toute autre structure en pierre naturelle.

5. Un procédé selon la revendication 4, caractérisé en ce que ledit motif comprend des compositions chromatiques colorées de n'importe quel type.

6. Un procédé selon l'une ou plusieurs des revendications précédentes, caractérisé en ce que ladite couche de peinture (5) est réalisée moyennant un procédé d'argentage ou de dorure.

7. Un procédé selon l'une ou plusieurs des revendications précédentes, caractérisé en ce que ledit procédé comprend l'étape de l'application, après avoir apporté ladite couche recouvrante métallisée ou de peinture contenant des pigments d'argent ou d'or, d'une pellicule en matériau plastique thermofondant à laquelle est couplé à chaud un pan de verre ou en cristal opérant en tant qu'élément protecteur et renforçant additionnel.

8. Un procédé selon l'une ou plusieurs des revendications précédentes, caractérisé en ce que ladite pellicule en matériau plastique thermofondant comprend une résine polyvinylbutylique.
